# EUROPÄISCHE PATENTSCHRIFT

(11) **EP 3 772 349 B1**
(45) Veröffentlichungstag und Bekanntmachung des Hinweises auf die Patenterteilung: **18.05.2022**
(21) Anmeldenummer: 19190635.3
(22) Anmeldetag: 08.08.2019
(51) Int. Cl.: A61C 17/10

(54) **SAUGVORRICHTUNG**
SUCTION DEVICE
DISPOSITIF D'ASPIRATION

(43) Veröffentlichungstag der Anmeldung: 10.02.2021
(73) Patentinhaber: Ivoclar Vivadent AG, 9494 Schaan (LI)
(72) Erfinder: ASUM, Thomas, 41136 Göteborg (SE); PARVAZI, Afshin, 8597 Landschlacht (CH)
(74) Vertreter: Baronetzky, Klaus

(56) Entgegenhaltungen:
- DE-A1- 2 120 707
- US-A- 4 233 025
- US-A- 4 259 067
- US-A- 5 094 616
- US-A- 5 203 699
- US-A1- 2018 193 120

## Beschreibung

Die Erfindung betrifft eine Saugvorrichtung für den intraoralen Einsatz, gemäß dem Oberbegriff von Anspruch 1.

Derartige Saugvorrichtungen sind seit langem bekannt, beispielsweise aus der US 5 071 347 A1 und der US 6 309 218 A1, aber auch aus der US 1 742 080 A1.

Eine neuere Lösung gemäß der EP 3 620 081 A1 stellt demgegenüber eine Verbesserung dar. Bei dieser Lösung wird ein Saugschlauch, dessen Ende von einem schwammartigen Absorptionskörper abgedeckt ist, U-förmig gebogen.

Dies dient dazu, den gesamten intraoralen Bereich oral des unteren Kieferkamms abzudecken und sich dort ansammelnden Speichel abzusaugen.

An dem Absorptionskörper kann ein Zungenschutz angebracht sein, der sich von dem Absorptionskörper nach oben erstreckt.

Diese Lösung hat den gewissen Nachteil, dass sie eine sorgfältige Anpassung an die Anatomie des Patienten erfordert, um wirksam zu sein. So ist der intraorale Raum zwischen unterschiedlichen Patienten unterschiedlich, insbesondere unterschiedlich breit. Wenn der U-förmige Absorptionskörper mit seinen beiden nebeneinander liegenden Schenkeln zu breit eingestellt ist, wird er durch die Aufweitung nach okklusal, also nach oben hin, gleichsam automatisch gedrückt. Dann kann er nicht an der tiefsten Stelle anliegen und die Saugleistung ist unbefriedigend.

Aufgrund der Notwendigkeit der Anpassung sind sowohl der Saugschlauch als auch der Absorptionskörper nachgiebig und nehmen keinen definierten Zustand ein. Eine weitere Saugvorrichtung ist aus US 2018/193120 A1 bekannt.

Demgegenüber liegt der Erfindung die Aufgabe zugrunde, eine verbesserte Saugvorrichtung gemäß dem Oberbegriff von Anspruch 1 zu schaffen, die auch bei unterschiedlichen Mundsituationen bedienungssicher ist und eine gute Saugleistung an der für die Behandlung relevanten Stelle bietet.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass die für den intraoralen Einsatz gedachte Saugvorrichtung mit einem besonderen Formteil ausgestattet ist. Das Formteil ist an einen Saugschlauch angeschlossen und dafür vorgesehen, sich von dem Kieferkamm einseitig nach unten zu erstrecken, bis zum tiefsten Punkt im Mund des Patienten im intraoralen Bereich.

Das Formteil weist ein U-förmig gebogenes Saugrohr auf. Das U hat hierbei eine vertikale Erstreckungsachse, im Gegensatz zum Stand der Technik.

Im Zahnarztstuhl ist der Patient in der Regel bei der Behandlung in einer liegenden oder nahezu liegenden Position. Dies bedeutet, dass die tiefste intraorale Stelle im distalen Bereich des Mundinnenraums liegt. Genau dort ist erfindungsgemäß die End-Saugöffnung des unteren U-Schenkels des Saugrohrs vorgesehen, so dass dort intensiv abgesaugt wird.

Erfindungsgemäß bildet das Formteil sowohl das Saugrohr aus als auch den Zungenschutz. Durch die U-förmige Erstreckung entsteht eine gewisse vertikale Höhe, die dazu führt, dass die Zunge des Patienten das Formteil mit der End-Saugöffnung automatisch nach unten drückt. Dies ist für den Patienten nicht unangenehm, denn dort ist der erfindungsgemäße Saugschwamm so vorgesehen, dass der untere U-Schenkel vollständig und voluminös, aber elastisch von dem Saugschwamm abgedeckt ist.

Sowohl der untere U-Schenkel als auch der obere U-Schenkel des Saugrohres erstrecken sich unterhalb oder zumindest schräg unterhalb der Zunge des Patienten. Hingegen erstreckt sich der Zungenschutz von oberen U-Schenkel ausgehend nach oben. Er ist in an sich bekannter Weise nach der Art eines Plättchens flach und weist bevorzugt Abrundungen und glatte Flächen auf, oder bei Bedarf auch eine Hülle aus einem elastischen Material, die bevorzugt beim Spritzguss mit dem Formteil verankert ist.

Die U-Form des Saugrohres bietet zudem den Vorteil, dass sich der Saugschwamm sicher verankern lässt. Er kann klebstofffrei montiert werden, in dem er auf den unteren U-Schenkel aufgestülpt wird. Durch Haltedorne, die sich von dem oberen U-Schenkel nach unten erstrecken und in dem Saugschwamm eindringen, ist der Saugschwamm gegen Abrutschen gesichert gehalten.

Klebstofffrei lässt sich auch der Übergang zwischen Saugrohr und Saugschlauch realisieren. Hierzu ist der Saugschlauch entweder in das Saugrohr eingepresst oder das Formteil ist zweiteilig ausgebildet, und durch Zusammenklipsen der Teile des Formteils lässt sich der Saugschlauch einklemmen. Besonders vorteilhaft ist, wenn anschließend die Einheit, also der Saugrohr und Saugschlauch, mittels Hochfrequenz oder mittels anderes Verfahren verschweisst wird.

Es versteht sich, dass das Formteil aus einem wesentlich härteren Kunststoff besteht als der Saugschlauch und erst recht als der Saugschwamm. Beispielsweise kann es aus PE, PP, PA oder ABS bestehen, oder aus einem beliebigen Material, dass für Spritzguss geeignet ist

Der Saugschwamm besteht demgegenüber bevorzugt aus einem Elastomer oder ggf. aus natürlichem Schwammmaterial. Der Saugschlauch besteht aus einem beliebigen geeigneten Material, beispielsweise Weich-PE oder PVC.

Um die Führung des Saugschlauchs definiert zu halten, ist es bevorzugt, ein Aussteifungselement wie einen Formhaltedraht in dem Saugschlauch verlaufen zu lassen, das anpassbar und entsprechend der Biometrie des Patienten biegbar ist. Der Formhaltedraht endet dann in dem Saugrohr des Formteils, so dass Verletzungen des Patienten durch einen vorstehenden Formhaltedraht sicher ausgeschlossen sind. Der Formhaltedraht kann aus einem beliebigen geeigneten, also biokompatiblen Material bestehen, z.B. rostfreiem Stahl oder Titan. Es ist auch möglich, den Formhaltedraht aus preisgünstigem Leichtmetall mit einem Beschichtung aus Kunststoff zu versehen.

Es sollte durch geeignete Maßnahmen sichergestellt werden, dass keine elektrolytischen Reaktionen mit metallischen Implantaten oder sonstigen Dentalrestaurationen stattfinden

Basierend auf der Formgebung durch den Formhaltedraht verläuft der Saugschlauch dann von dem mesialen Anschluss des Formteils ausgehend im Bogen nach oben, also zum Kieferkamm hin intraoral und verläuft bevorzugt hinter dem hintersten Molar über den Kieferkamm nach vestibulär.

Im vestibulären Bereich ist er erneut abgebogen, so dass der Saugschlauch sich von dort nach mesial erstreckt und aus dem Mund austritt.

Der Formhaltedraht weist insofern von Anschluss ausgehend eine Biegung im Wesentlichen im rechten Winkel auf, dann verläuft er über den Kieferkamm hinweg in einem 1 bis 2 cm breiten U-förmigen Bogen, der nach unten offen ist, dann erstreckt sich vestibulär wiederum eine Abwinklung um etwa 90° nach mesial.

Hierbei seien unter "etwa 90°" Bereiche zwischen etwa 70° und 110° zu verstehen.

Erfindungsgemäß ist es vorteilhafterweise vorgesehen, dass Saugöffnungen ausschließlich im unteren U-Schenkel des Formteils ausgebildet sind. Die zur Verfügung stehende Saugleistung wird hierdurch auf den Bereich konzentriert, indem tatsächlich Flüssigkeit absaugbar ist. Hierbei ist bevorzugt die Saugöffnung, die dem U-Mittenbereich am nächsten ist, am kleinsten. Die End-Saugöffnung ist bevorzugt am größten.

Es ist möglich, die nach oben, also zum oberen U-Schenkel weisenden Saugöffnungen mit einem kleineren Durchmesser auszubilden, und jedenfalls die mesial und unten, also gingiva-nah, angeordneten Saugöffnungen mit einem vergleichsweise großen oder größeren Durchmesser auszubilden.

Bevorzugt ist die Summe der Querschnittsflächen der Saugöffnungen größer als der Innendurchmesser des Saugrohrs. Hierdurch wird eine vergleichsweise geringe Strömungsgeschwindigkeit der Flüssigkeit im distalen unteren Bereich des U-Schenkels erzielt.

Bevorzugt ist das Saugrohr im oberen U-Schenkel zum Anschluss hin aufgeweitet. Hierdurch ist es möglich, den Saugschlauch im Wesentlichen den gleichen Strömungsquerschnitt wie dem Saugrohr in seinem überwiegenden Bereich zu geben.

Die Zweiteiligkeit des Formteils ist für die Massenproduktion z.B. durch das Spritzgussverfahren erforderlich und lässt sich beispielsweise über ein Filmscharnier realisieren, das Hälften des Formteils miteinander einstückig verbindet und das unten an dem unteren U-Schenkel ausgebildet ist. Beide Hälften lassen sich dann zusammenklappen und bevorzugt über geeignete Elemente, wie entsprechende Schnapphaken, pilzförmige Passstifte oder Rastzungen und entsprechenden Gegenausnehmungen, z.B. Rastausnehmungen, als Verankerungselement aneinander verrasten. Hierdurch wird dann auch das Ende des Saugschlauchs am Anschluss eingespannt.

Alternativ ist lediglich der Bereich des Anschlusses zweiteilig ausgebildet, so dass das Formteil aus einem wesentlich größerem Teil und einem kleineren Anschlussteil besteht.

Der Saugschwamm kann eine beliebige geeignete Form haben, beispielsweise einen kreisringförmigen Querschnitt oder einen trapezförmigen Querschnitt. Je weitmaschiger oder offenporiger der Schwamm ist, umso durchlässiger ist er, d.h. kleinere Partikel können besser zum Saugrohr gelangen, je feinmaschiger oder engporiger, umso saugfähiger.

Seine Wandstärke kann zwischen 2 und 10 mm betragen und beträgt bevorzugt etwa 4 bis 5 mm. Es versteht sich, dass ein offenporiger Schwamm mit feinen Poren mit einem Porendurchmesser von weniger als 1 mm bevorzugt ist. Der Saugschlauch wird an dem Anschluss durch die Presswirkung der Teile des Formteils aneinander fest eingespannt. Hierdurch ist auch eine Verdrehsicherung des Saugschlauchs gegenüber dem Formteil realisiert, und zugleich eine Auszugssicherung.

Der Zungenschutz kann bei Bedarf mit einem Prägebereich zur Identifikation der erfindungsgemäßen Saugvorrichtung versehen sein. Der Prägebereich kann so ausgebildet sein, dass er den anderen Teil des zweiteiligen Formteils durchtritt und dort eine bündige Oberfläche der beiden Teile entsteht.

Die U-Form des Saugrohrs ist so, dass das U vergleichsweise schmal ist. Beispielsweise kann der Schenkelabstand 6 bis 12 mm und bevorzugt etwa 9 mm betragen. Die Länge jedes Schenkels kann zwischen 2 und 5 mm betragen und bevorzugt etwa 3,5 mm. Bei dieser Ausgestaltung wird verhindert, dass durch Bewegung der Zunge und die Wirkung des Zungenschutzes der untere U-Schenkel zu stark auf die Gingiva drückt, so dass die Gingiva an der oralen Seite erfindungsgemäß nicht zu sehr unter Druck gesetzt wird.

In bevorzugter Ausgestaltung ist der untere U-Schenkel etwas länger, beispielsweise 1 cm länger, als der obere U-Schenkel bis zum Anschluss. Hierdurch wird der untere U-Schenkel mit der End-Saugöffnung sicher an die bei liegender Position des Patienten tiefste Stelle im Mundinnenraum intraoral gedrückt.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine perspektivische Darstellung eines Teils der erfindungsgemäßen intraoralen Saugvorrichtung, nämlich des Formteils in einer ersten Ausführungsform;
- Fig. 2: ein Teil des erfindungsgemäßen Formteils gemäß Fig. 1, nämlich eine Hälfte des Formteils im aufgeklappten Zustand;
- Fig. 3: das vollständige aufgeklappte Formteil gemäß Fig. 2;
- Fig. 4: eine schematische Schnittansicht von mesial durch die Lage und Anordnung der erfindungsgemäßen Saugvorrichtung in einer anderen Ausführungsform im Mund eines Patienten;
- Fig. 5: eine weitere Ausführungsform eines erfindungsgemäßen Formteils, dargestellt im Mund eines Patienten, betrachtet von oral;
- Fig. 6: ein Schnitt durch die Ausführungsform gemäß Fig. 5; und
- Fig. 7: eine perspektivische Darstellung eines Teils der erfindungsgemäßen intraoralen Saugvorrichtung, nämlich des Formteils in einer weiteren Ausführungsform.

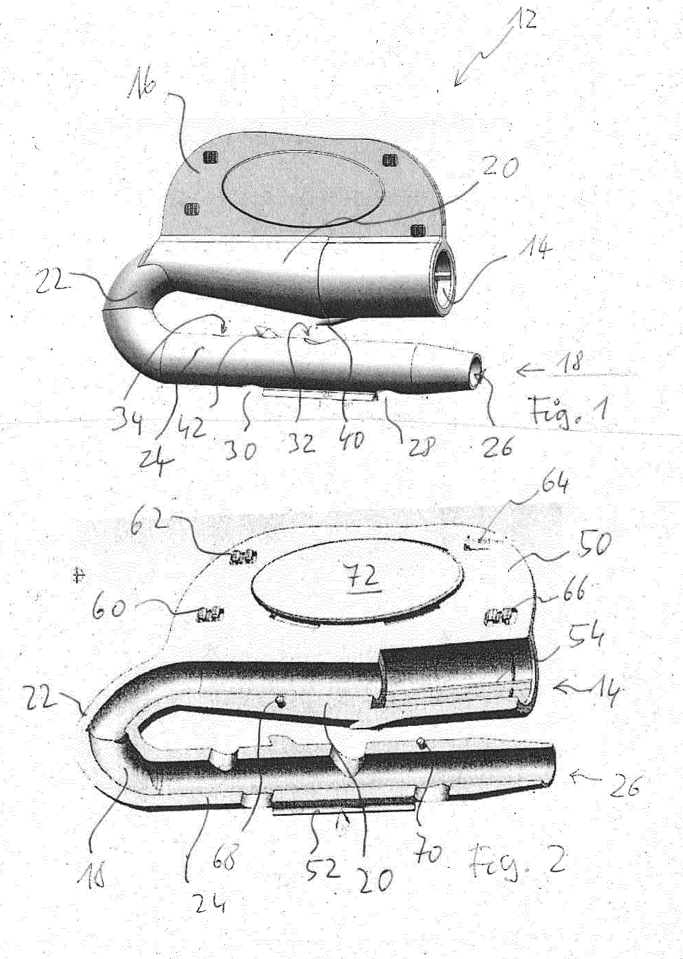

In Fig. 1 ist ein Teil einer Ausführungsform einer erfindungsgemäßen Saugvorrichtung 10 dargestellt, nämlich ein Formteil 12. Das Formteil 12 besteht aus festem Kunststoff und ist im Spritzgussverfahren hergestellt. Die Saugvorrichtung 10 umfasst neben dem Formteil 12 auch einen Saugschlauch 84, der in einem Anschluss 14 steckt, der in dem Formteil 12 ausgebildet ist, sowie einen Saugschwamm 80, der in Fig. 1 ebenfalls nicht dargestellt ist und den unteren Bereich des Formteils 12 umgibt.

Das Formteil 12 selbst weist einen Zungenschutz 16 auf, und ein Saugrohr 18. Das Saugrohr 18 erstreckt sich vom Anschluss 14 ausgehend nach der Art eines flachen und sich vertikal erstreckenden U. Dementsprechend umfasst das Formteil 12 und damit das Saugrohr 18 einen oberen U-Schenkel 20, einen U-Mittenbereich 22 und einen unteren U-Schenkel 24.

Die Saugvorrichtung 10 ist für die intraorale Anordnung bestimmt. Dementsprechend kommt bei der Anwendung das Formteil 12 im Innenraum des Mundes eines Patienten seitlich unter der Zunge zum Einsatz. Hierbei erstreckt sich der U-Mittenbereich 22 nach vorne, also mesial, und der Anschluss 14 nach hinten, also distal.

Der untere U-Schenkel 24 endet in einer End-Saugöffnung 26. Zudem weist der untere U-Schenkel 24 weitere Saugöffnungen 28, 30, 32 und 34 auf, die sich teils nach unten erstrecken, teils nach oben.

Die End-Saugöffnung 26 umgebend verläuft das Saugrohr 18 leicht konisch. Zudem springt dieser konische Bereich des unteren U-Schenkels 24 weiter nach distal vor als das Ende des Anschlusses 14 für den Saugschlauch 84.

Das Formteil 12 weist zudem zwei oder mehrere Haltedorne 40 und 42 auf. Im dargestellten Ausführungsbeispiel sind diese einander zugewandt seitlich an den U-Schenkeln 20 und 24 aufeinander zu weisend angebracht. Die Haltedorne 40 und 42 dienen als Auszugssicherung für den hier nicht dargestellten Saugschwamm 80, der auf den unteren U-Schenkel 24 aufgeschoben ist.

Wie aus Fig. 1 ersichtlich ist, ist das Formteil 12 insgesamt, insbesondere auch im Bereich des Zungenschutzes 16, abgerundet und mundfreundlich gestaltet. Auch die scharfkantig wirkende End-Saugöffnung 26 ist vollständig von dem weichen und nachgiebigen Saugschwamm 80 umgeben, so dass auch hier kein Verletzungsrisiko besteht.

Der U-förmige Mittenbereich 22 erstreckt sich unter der Zunge mesial und ist stark abgerundet, so dass auch hier kein Verletzungsrisiko besteht.

Aus Fig. 2 ist die Ausführungsform der erfindungsgemäßen Saugvorrichtung 10 gemäß Fig. 1 in einem Teil 50 ersichtlich.

In diesem Ausführungsbeispiel ist das Formteil 12 teilbar, und in Fig. 2 ist lediglich ein Teil 50 ersichtlich. Die beiden Teile sind über ein Filmscharnier 52 miteinander verbunden. Das Filmscharnier 52 erstreckt sich unmittelbar angrenzend unten an den unteren U-Schenkel 24.

Hier wie auch in den weiteren Figuren weisen gleiche Bezugszeichen auf gleiche oder entsprechende Teile hin und bedürfen keiner erneuten Beschreibung.

Wie ersichtlich ist, erstreckt sich das Saugrohr 18 U-förmig bis zum Anschluss 14. Der Anschluss 14 weist einen größeren Innendurchmesser als das Saugrohr 18 im übrigen auf. Die Wandstärke des Schlauchs entspricht der Durchmesserdifferenz, so dass innen ein im Wesentlichen bündiger Übergang zwischen Saugrohr 18 und dem nicht dargestellten Saugschlauch 84 vorliegt.

Der Anschluss 14 ist zudem mit mindestens einer Rippe versehen, die nach einwärts vorspringt und eine Verdrehsicherung für den Saugschlauch 84 bildet.

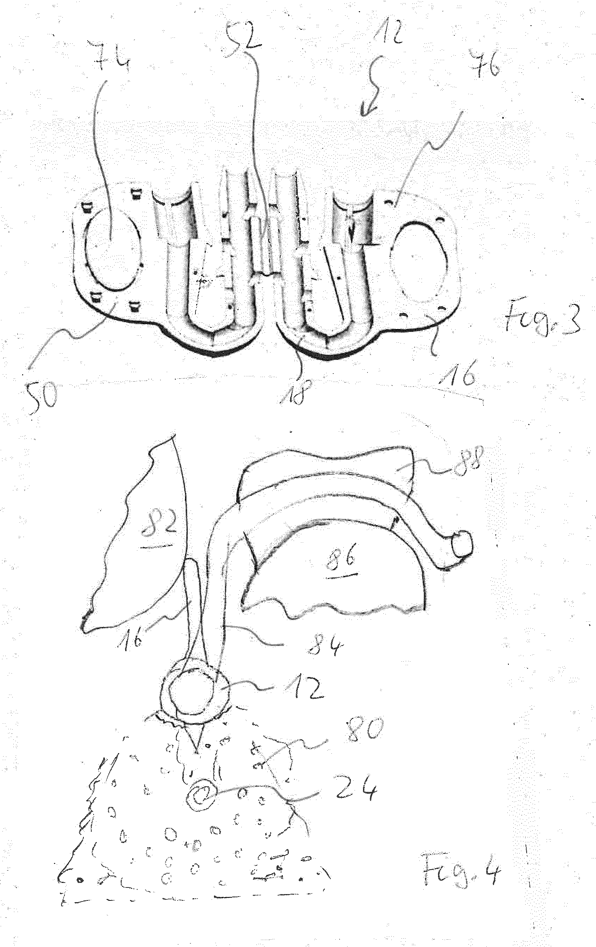

Wie aus Fig. 2 ersichtlich ist, sind mehrere Haltenasen 60, 62, 64, 66, 68 und 70 als Verankerungselemente für die Fixierung der Teile 50 und 76 aneinander vorgesehen, die eine entsprechende Rastausnehmung in dem in Fig. 3 dargestellten anderen Teil 76 des Formteils 12 einrasten und die beiden Teile aufeinander fixieren.

Es ist eine erhabene Prägefläche 74 vorgesehen, die beispielsweise eine Beschriftung tragen kann und eine entsprechende Ausnehmung in dem anderen Teil durchdringt, und zwar dergestalt, dass sie mit der gegenüberliegende Seite des anderen Teils bündig ist, so dass der Zungenschutz 16 insgesamt eine glatte und bündige Oberfläche aufweist.

Das Formteil 12 mit den beiden Teilen 50 und 76 ist aus Fig. 3 in aufgeklapptem Zustand ersichtlich. Während die beiden Teile 50 und 76 in sich steif sind und die erwünschte mechanische Festigkeit ermöglichen, ist das Filmscharnier 52 in an sich bekannter Weise aus dem gleichen Kunststoff, jedoch so dünn, dass es eine Gelenkfunktion bildet.

Das Formteil 12 ist in dem dargestellten Ausführungsbeispiel einstückig und lässt sich dementsprechend in einem als Spritzgussteil herstellen.

Aus Fig. 4 ist ersichtlich, in welcher Weise ein Saugschwamm 80 den unteren U-Schenkel 24 des Formteils 12 umgibt. Im dargestellten Ausführungsbeispiel ist der Saugschwamm 80 im Wesentlichen trapezförmig, wobei es sich versteht, dass auch beliebige andere Formen möglich sind. Er erstreckt sich bis zum oberen U-Schenkel 20, von dem auf ein Haltedorn 40 nach unten weist. Der Haltedorn 40 greift in den Saugschwamm 80 ein und fixiert diesen gegen Entnahme.

Wie ersichtlich ist, hält der Zungenschutz 16 eine schematisch dargestellte Zunge 82 eines Patienten seitlich ab.

Die Darstellung gemäß Fig. 4 erfolgt von distal nach mesial, und ein Saugschlauch 84 ist in einen Anschluss 14 des Formteils 12 eingesteckt. Der Saugschlauch 84 verläuft zunächst weiter nach distal und ist dann nach oben abgebogen, so dass der Saugschlauch 84 oberhalb des Kieferkamms 86 distal am hintersten Molar 88 den Kieferkamm 86 überqueren kann. Im vestibulären Bereich ist der Saugschlauch 84 nach mesial umgelenkt, so dass er den Mund des Patienten verlassen kann.

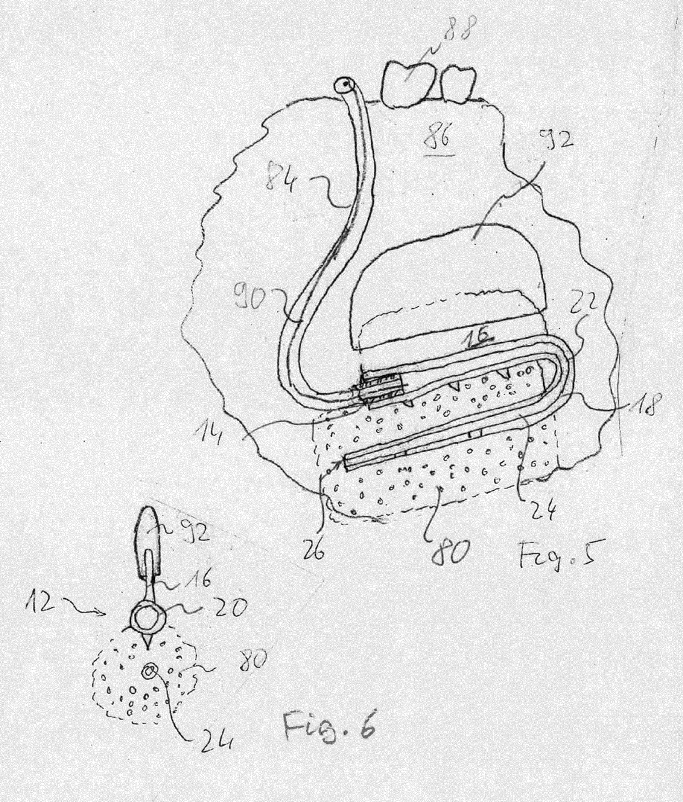

Die dargestellte Formgebung des Saugschlauches 84 ist durch einen Formhaltedraht 90 gewährleistet, der als Formhaltedraht 90 in Fig. 5 dargestellt ist, in Fig. 4 jedoch nicht dargestellt ist.

Aus Fig. 5 ist ferner ersichtlich, dass in einer anderen Ausführungsform der Saugschwamm 80 im Wesentlichen zylinderfömig verlaufen kann. Eine End-Saugöffnung 26 des Saugrohrs 18 ist von dem Saugschwamm 80 abgedeckt. Bei dieser Ausführungsform sind lediglich am oberen U-Schenkel 20 des Saugrohrs 18 Haltedorne 40 realisiert, die in den Saugschwamm 80 eingreifen und diesen fixieren.

Bei dieser Ausführungsform ist der Zungenschutz 16 durch eine weiche Kappe 92 etwas verlängert. Diese hat zwar im Wesentlichen die gleiche Steifheit wie das Formteil 12 im übrigen, hat jedoch eine weichere Oberflächenanmutung, was vom Patienten als angenehm empfunden wird.

Durch nicht dargestellte Stege und Nuten ist die Kappe 92 verliersicher mit dem Formteil 12 im übrigen verbunden; die Verbindung kann zweckmäßig durch Anspritzen in der Spritzgussform realisiert sein.

Wie ersichtlich ist, verläuft bei dieser Ausführungsform das Saugrohr 18 zur End-Saugöffnung 26 hin etwas verjüngt, also mit abnehmenden Innendurchmesser. Die Verjüngung erfolgt so, dass eine hohe Strömungsgeschwindigkeit an der End-Saugöffnung 26 vorliegt, die das Aufsaugen von Flüssigkeiten an der tiefsten intraoralen Stelle im Mund des Patienten begünstigt.

Aus Fig. 6 ist ersichtlich, in welcher Weise die Ausführungsform gemäß Fig. 5 sich in einem sich mesial/distal erstreckenden Schnitt darstellt. Es ist ersichtlich, dass der Saugschwamm 80 eine wesentlich größere Breite als das Formteil 12 hat. Die Höhe des Formteils 12 einschließlich des Zungenschutzes 16 ist deutlich höher als der Durchmesser des Saugschlauches 84, so dass zum einen eine gute Saugwirkung erzielt wird, zum anderen der Zungenschutz 16 die Zunge des Patienten von dem Behandlungsbereich abhält.

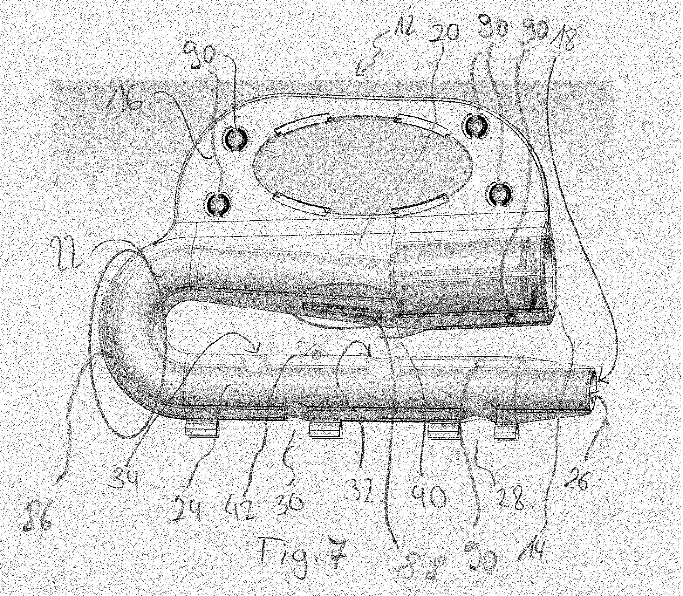

Fig. 7 zeigt eine gegenüber der Lösung gemäß Fig. 1 etwas modifizierte Ausführungsform. Es sind zusätzliche Verankerungselemente 86 und 88 vorgesehen, und zwar am U-förmigen Mittenbereich 22 und am oberen U-Schenkel 20, unmittelbar angrenzend an den Anschluss 14.

Diese sind länglich ausgebildet und erstrecken sich entlang des Saugrohrs 18.

Zudem sind zahlreiche Schnapphaken 90 verteilt angeordnet. Unter anderem sind zwei Schnapphaken 90 dem Anschluss 18 benachbart vorgesehen. Diese halten in diesem Bereich die Teile 50 und 76 zueinander vorgespannt, so dass der Saugschlauch 84 im Anschluss 18 unverlierbar gehalten ist.

## Patentansprüche

1. Saugvorrichtung für die intraorale Anwendung, mit einer Saugleitung und einem Zungenschutz, welche Saugleitung im wesentlichen U-förmig gebogen ist, wobei die Saugleitung, als Saugrohr (18), und der Zungenschutz (16) durch ein Formteil (12) ausgebildet sind, wobei das Saugrohr (18) einen Anschluss (14) für einen Saugschlauch (84) aufweist, und wobei sich im Verlauf des Saugrohrs (18) an den Anschluss (14) ein oberer U-Schenkel (20) und ein unterer U-Schenkel (24) anschließt, wobei der untere U-Schenkel (24) Saugöffnungen aufweist und von einem Saugschwamm (80) umgeben ist, der sich um den unteren U-Schenkel (24) erstreckt und die Saugöffnungen abdeckt, wobei die Schenkel sich von einem mesialen U-Mittenbereich (22) in horizontaler Richtung nach distal weg erstrecken, und das Saugrohr (18) an dem distalen Ende des unteren U-Schenkels (24) mit einer End-Saugöffnung (26) endet, die von dem Saugschwamm (80) abgedeckt ist, **dadurch gekennzeichnet, dass** die Saugleitung an dem distalen Ende des unteren U-Schenkels (24) endseitig düsenförmig verjüngt ist.

2. Saugvorrichtung nach Anspruch 1, **dadurch gekennzeichnet, dass** dass die Saugleitung, als Saugrohr (18), und der Zungenschutz (16) durch ein Formteil (12) einstückig zueinander ausgebildet sind.

3. Saugvorrichtung nach einem der vorherigen Ansprüche, **dadurch gekennzeichnet, dass** das Formteil (12) aus Kunststoff in einem Formgebungsverfahren, insbesondere als Spritzgussteil, hergestellt ist, oder in einem additiven Verfahren, insbesondere per Rapid-Prototyping.

4. Saugvorrichtung nach einem der vorherigen Ansprüche, **dadurch gekennzeichnet, dass** des Saugschwamm (80) bis zum oberen U-Schenkel (20) reicht, insbesondere an diesem anliegt und besonders bevorzugt gegen diesen drückt und ihn teilweise umgibt.

5. Saugvorrichtung nach einem der vorherigen Ansprüche, **dadurch gekennzeichnet, dass** der Saugschwamm (80) eine größere Breite als das Formteil (12) aufweist, insbesondere mindestens die dreifache Breite und/oder dass die Höhe des Formteils (12) größer als der Durchmesser des Saugschwamms ist.

6. Saugvorrichtung nach einem der vorherigen Ansprüche, **dadurch gekennzeichnet, dass** der Zungenschutz (16) sich angrenzend an den oberen Schenkel (20) des Saugrohrs (18) oberhalb dessen erstreckt, und dass insbesondere das Formteil (12) am Übergang zwischen Saugrohr (18) und Zungenschutz (16) eine zungenfreundliche Hohlkehle ausbildet.

7. Saugvorrichtung nach einem der vorherigen Ansprüche, **dadurch gekennzeichnet, dass** eine Mehrzahl von Saugöffnungen (28, 30, 32, 24) über den unteren U-Schenkel (24) des Saugrohrs (18) verteilt angeordnet sind, von denen mindestens eine nach unten weist und dass insbesondere der obere U-Schenkel (20) frei von Saugöffnungen (28, 30, 32, 24) ist.

8. Saugvorrichtung nach einem der vorherigen Ansprüche, **dadurch gekennzeichnet, dass** eine dem Mittenbereich (22) benachbarte Saugöffnung eine geringere Querschnittsfläche als eine distalere Saugöffnung aufweist.

9. Saugvorrichtung nach einem der vorherigen Ansprüche, **dadurch gekennzeichnet, dass** die End-Saugöffnung (26) sich über die distale Stirnfläche der Saugleitung erstreckt.

10. Saugvorrichtung nach einem der vorherigen Ansprüche, **dadurch gekennzeichnet, dass** mindestens eine Saugöffnung, die an dem unteren U-Schenkel (24) ausgebildet ist, zum anderen U-Schenkel (20), also nach oben, weist, insbesondere mindestens zwei Saugöffnungen.

11. Saugvorrichtung nach einem der vorherigen Ansprüche, **dadurch gekennzeichnet, dass** der Saugschwamm (80) sich im Wesentlichen über die gesamte Länge des unteren U-Schenkels (24) erstreckt, also über mehr als 70% dessen Gesamtlänge und den unteren U-Schenkel (24) umgibt und einen insbesondere im wesentlichen trapezförmigen Querschnitt aufweist.

12. Saugvorrichtung nach einem der vorherigen Ansprüche, **dadurch gekennzeichnet, dass** ein Haltedorn (40, 42) an dem unteren U-Schenkel (24) der Saugleitung ausgebildet ist, der insbesondere in mesiale Richtung weist und den Saugschwamm (80) von innen aufspießt und/oder dass ein Haltedorn (40, 42) an dem oberen U-Schenkel (20) vorgesehen ist, der zum unteren U-Schenkel (24) weist und mesial ausgerichtet ist und den Saugschwamm (80) von außen aufspießt.

13. Saugvorrichtung nach einem der vorherigen Ansprüche, **dadurch gekennzeichnet, dass** der Zungenschutz (16) sich über im Wesentlichen die gesamte Länge, also über mehr als 70% der Länge, des oberen U-Schenkels (20) erstreckt und von diesen nach oben, also dem unteren U-Schenkel gegenüberliegend, verläuft.

14. Saugvorrichtung nach einem der vorherigen Ansprüche, **dadurch gekennzeichnet, dass** die Saugleitung an dem distalen Ende des oberen U-Schenkels (20) an einen Saugschlauch angeschlossen ist, insbesondere klebstofffrei angeschlossen ist.

15. Saugvorrichtung nach Anspruch 13, **dadurch gekennzeichnet, dass** der Saugschlauch ein Aussteifungselement aufweist, das sich in ihm erstreckt, insbesondere einen Draht, der so gebogen ist, dass er den Saugschlauch entlang dem Kieferkamm (86) und distal des hintersten Molars (88) über den Kieferkamm (86) nach vestibulär und extraoral führt.

16. Saugvorrichtung, nach einem der vorhergehenden Ansprüche, **dadurch gekennzeichnet, dass** das Formteil (12)mindestens zwei Teile aufweist, welche durch Aufeinanderfügen den Saugschlauchklemmend fixieren.

17. Saugvorrichtung nach Anspruch 15, **dadurch gekennzeichnet, dass** die Teile , insbesondere über ein Filmscharnier (52), schwenkbeweglich miteinander verbunden sind, wobei insbesondere das Filmscharnier (52)unterhalb des unteren U-Schenkels (24) ausgebildet ist.

18. Saugvorrichtung nach Anspruch 15 oder Anspruch 16, **dadurch gekennzeichnet, dass** die Teile (50, 76) über Verankerungselemente miteinander verbunden sind und die Teile (50, 76) eingerastet aneinander fixieren.

19. Saugvorrichtung nach einem der Ansprüche 15 bis 17, **dadurch gekennzeichnet, dass** im Bereich des Zungenschutzes (16) ein Teil (50, 76) in das andere eintaucht und dieses unter Bildung einer im wesentlichen bündigen Oberfläche durchtritt.

## Claims

1. A suction device for intraoral use, comprising a suction line and a tongue guard, which suction line is essentially bent in a U-shape, the suction line, as a suction tube (18), and the tongue guard (16) being formed by a molded part(12), wherein the suction pipe (18) comprises a connection (14) for a suction tube (84), and wherein, in the course of the suction pipe (18), an upper U-leg (20) and a lower U-leg (24) adjoin the connection (14), wherein the lower U-leg (24) comprises suction openings and is surrounded by a suction sponge (80) extending around the lower U-leg (24) and covering the suction openings, the legs extending distally away from a mesial U-center region (22) in a horizontal direction, and the suction pipe (18) terminates at the distal end of the lower U-leg (24) with an end suction opening (26) which is covered by the suction sponge (80), **characterized in that** the suction pipe is endsidedly tapered in a nozzle-shaped manner at the distal end of the lower U-leg (24).

2. The suction device according to claim 1, **characterized in that** the suction line, as a suction tube (18), and the tongue guard (16) are integrally formed with each other using a molded part (12).

3. The suction device according to one of the preceding claims, **characterized in that** the molded part (12) is made of plastic material in a molding process, especially as an injection-molded part, or in an additive process, especially by rapid prototyping.

4. The suction device according to one of the preceding claims, **characterized in that** the suction sponge (80) reaches up to the upper U-leg (20), especially bearing against it, and especially preferably presses against it, and partially surrounding it.

5. The suction device according to one of the preceding claims, **characterized in that** the suction sponge (80) has a greater width than the molded part (12), in particular at least three times the width, and/or **in that** the height of the molded part (12) is greater than the diameter of the suction sponge.

6. The suction device according to one of the preceding claims, **characterized in that** the tongue guard (16) extends adjacent to the suction tube (18) upper leg (20) and above the suction tube, and **in that**, in particular, the molded part (12) forms a tongue-friendly fillet at the transition between suction tube (18) and tongue guard (16).

7. The suction device according to one of the preceding claims, **characterized in that** a plurality of suction openings (28, 30, 32, 24) are arranged distributed over the lower U-leg (24) of the suction tube (18), at least one of which facing downwards, and **in that** especially the upper U-leg (20) is free of suction openings (28, 30, 32, 24).

8. The suction device according to one of the preceding claims, **characterized in that** a suction opening adjacent to the central region (22) has a smaller cross-sectional area than a more distal suction opening.

9. The suction device according to one of the preceding claims, **characterized in that** the end suction opening (26) extends across the distal end surface of the suction line.

10. The suction device according to one of the preceding claims, **characterized in that** at least one suction opening formed on the lower U-leg (24) faces the other U-leg (20), i.e. facing upwards, especially at least two suction openings.

11. The suction device according to one of the preceding claims, **characterized in that** the suction sponge (80) essentially extends along the entire length of the lower U-leg (24), i.e. along more than 70% of its total length and surrounds the lower U-leg (24) and especially having an essentially trapezoidal cross-section.

12. The suction device according to one of the preceding claims, **characterized in that** a retaining mandrel (40, 42) is formed on the lower U-leg (24) of the suction line, which mandrel especially faces towards the mesial direction and impales the suction sponge (80) from the interior and/or **in that** a retaining mandrel (40, 42) is provided on the upper U-leg (20), which mandrel faces toward the lower U-leg (24) and is mesially aligned and impales the suction sponge (80) from the outside.

13. The suction device according to one of the preceding claims, **characterized in that** the tongue guard (16) extends over substantially the entire length, i.e. over more than 70% of the length, of the upper U-leg (20) and extends upwardly therefrom, i.e. opposite the lower U-leg.

14. The suction device according to one of the preceding claims, **characterized in that** the suction line is connected to a suction tube at the distal end of the upper U-leg (20), and especially is connected thereto in an adhesive-free manner.

15. The suction device according to claim 13, **characterized in that** the suction tube comprises stiffening member extending therein, especially a wire bent so as to guide the suction tube along the alveolar ridge (86) and distally of the rearmost molar (88) over the alveolar ridge (86) towards the vestibular and extraoral directions.

16. The suction device according to one of the preceding claims, **characterized in that** the molded part (12) comprises at least two parts clampingly fixing the suction tube by joining one on top of the other.

17. The suction device according to claim 15, **characterized in that** the parts are pivotally connected to each other, especially via a film hinge (52), the film hinge (52) especially being formed below the lower U-leg (24).

18. The suction device according to claim 15 or claim 16, **characterized in that** the parts (50, 76) are connected to each other via anchoring members engagingly fixing the parts (50, 76) to each other.

19. The suction device according to one of the claims 15 to 17, **characterized in that**, in the region of the tongue guard (16), one part (50, 76) immerses into the other passing therethrough to form a substantially flush surface.

## Revendications

1. Dispositif d'aspiration pour l'utilisation intra-orale, avec un conduit d'aspiration et un protège-langue, où le conduit d'aspiration est courbé essentiellement en forme de U, où le conduit d'aspiration, et le protège-langue (16)sont formés respectivement en tant que tube d'aspiration (18) et par une pièce moulée (12), où le tuyau d'aspiration (18) présente un raccord (14) pour un tuyau d'aspiration flexible (84), et où une branche supérieure (20) en U et une branche inférieure (24) en U se raccordent au raccord (14) sur le parcours du tuyau d'aspiration (18), où la branche inférieure en U (24) présente des ouvertures d'aspiration et est entourée d'une éponge d'aspiration (80), qui s'étend autour de la branche inférieure en U (24) et recouvre les ouvertures d'aspiration, où les branches s'éloignent d'une zone centrale mésiale en U (22) dans la direction horizontale vers la zone distale, et le tuyau d'aspiration (18) se termine à l'extrémité distale de la branche inférieure en U (24) par une ouverture d'aspiration finale (26) qui est recouverte par l'éponge d'aspiration (80), **caractérisé en ce que** le tuyau d'aspiration se rétrécit en forme de buse à l'extrémité de l'extrémité distale de la branche inférieure en U (24).

2. Dispositif d'aspiration selon la revendication 1, **caractérisé en ce que** la conduite d'aspiration, en tant que le tube d'aspiration (18), et le protège-langue (16) sont formées d'un seul tenant l'une par rapport à l'autre par une pièce moulée (12).

3. Dispositif d'aspiration selon l'une des revendications précédentes, **caractérisé en ce que** la pièce moulée (12) est réalisée en matière plastique par un procédé de moulage, en particulier par injection, ou par un procédé additif, en particulier par prototypage rapide.

4. Dispositif d'aspiration selon l'une des revendications précédentes, **caractérisé en ce que** l'éponge d'aspiration (80) s'étend jusqu'à la branche supérieure en U (20), en particulier s'appuie sur celle-ci et de manière particulièrement préférée appuie contre celle-ci et la renverse partiellement.

5. Dispositif d'aspiration selon l'une des revendications précédentes, **caractérisé en ce que** l'éponge d'aspiration (80) présente une largeur supérieure à celle de la pièce moulée (12), en particulier au moins le triple de la largeur et/ou **en ce que** la hauteur de la pièce moulée (12) est supérieure au diamètre de l'éponge d'aspiration.

6. Dispositif d'aspiration selon l'une des revendications précédentes, **caractérisé en ce que** le protège-langue (16) s'étend de manière adjacente à la branche supérieure (20) du tube d'aspiration (18), au-dessus de celui-ci, et **en ce que** la pièce moulée (12) forme en particulier une gorge creuse favorable à la langue à la transition entre le tube d'aspiration (18) et le protège-langue (16).

7. Dispositif d'aspiration selon l'une des revendications précédentes, **caractérisé en ce qu'**une pluralité d'ouvertures d'aspiration (28, 30, 32, 24) sont réparties sur la branche inférieure (24) en U du tube d'aspiration (18), dont au moins une est orientée vers le bas, et **en ce que** la branche supérieure (20) du U est en particulier exempte d'ouvertures d'aspiration (28, 30, 32, 24).

8. Dispositif d'aspiration selon l'une des revendications précédentes, **caractérisé en ce qu'**une ouverture d'aspiration voisine de la zone centrale (22) présente une surface de section transversale inférieure à celle d'une ouverture d'aspiration plus distale.

9. Dispositif d'aspiration selon l'une des revendications précédentes, **caractérisé en ce que** l'ouverture d'aspiration finale (26) s'étend sur la surface d'extrémité distale du conduit d'aspiration.

10. Dispositif d'aspiration selon l'une des revendications précédentes, **caractérisé en ce qu'**au moins un orifice d'aspiration formé sur la branche inférieure en U (24) est dirigé vers l'autre branche en U (20), c'est-à-dire vers le haut, en particulier au moins deux orifices d'aspiration.

11. Dispositif d'aspiration selon l'une quelconque des revendications précédentes, **caractérisé en ce que** l'éponge d'aspiration (80) s'étend sensiblement sur toute la longueur de la branche inférieure en U (24), soit sur plus de 70% de sa longueur totale, et entoure la branche inférieure en U (24) et présente une section transversale en particulier sensiblement trapézoïdale.

12. Dispositif d'aspiration selon l'une des revendications précédentes, **caractérisé en ce qu'**un mandrin de maintien (40, 42) est formé sur la branche inférieure (24) en U du conduit d'aspiration, qui est en particulier orienté en direction mésiale et empale l'éponge d'aspiration (80) par l'intérieur et/ou **en ce qu'**un mandrin de maintien (40, 42) est prévu sur la branche supérieure (20) en U, qui est orienté vers la branche inférieure (24) en U et est orienté en direction mésiale et empale l'éponge d'aspiration (80) par l'extérieur.

13. Dispositif d'aspiration selon l'une quelconque des revendications précédentes, **caractérisé en ce que** le protège-langue (16) s'étend sur sensiblement toute la longueur, c'est-à-dire sur plus de 70% de la longueur, de la branche supérieure en U (20) et s'étend depuis celle-ci vers le haut, c'est-à-dire en regard de la branche inférieure en U.

14. Dispositif d'aspiration selon l'une des revendications précédentes, **caractérisé en ce que** le conduit d'aspiration est raccordé à un tuyau d'aspiration à l'extrémité distale de la branche supérieure en U (20), en particulier est raccordé sans colle.

15. Dispositif d'aspiration selon la revendication 13, **caractérisé en ce que** le tube d'aspiration comprend un élément de raidissement qui s'étend à l'intérieur de celui-ci, en particulier un fil métallique qui est plié de manière à guider le tube d'aspiration le long de la crête (86) et en position distale par rapport à la molaire la plus postérieure (88), en passant par la crête (86) vers la zone vestibulaire et extra-orale.

16. Dispositif d'aspiration selon l'une des revendications précédentes, **caractérisé en ce que** la pièce moulée (12) comporte au moins deux parties qui, en s'emboîtant l'une dans l'autre, fixent le tuyau d'aspiration en le serrant.

17. Dispositif d'aspiration selon la revendication 15, **caractérisé en ce que** les parties sont reliées entre elles de manière pivotante, en particulier par une charnière en film (52), ou la charnière en film (52) est en particulier réalisée en dessous de la branche inférieure en U (24).

18. Dispositif d'aspiration selon la revendication 15 ou la revendication 16, **caractérisé en ce que** les pièces (50, 76) sont reliées entre elles par des éléments d'ancrage et fixent les pièces (50, 76) les unes aux autres par encliquetage.

19. Dispositif d'aspiration selon l'une des revendications 15 à 17, **caractérisé en ce que**, dans la zone du protège-langue (16), une pièce (50, 76) plonge dans l'autre et la traverse en formant une surface sensiblement affleurante.
